# EUROPEAN PATENT SPECIFICATION

(11) **EP 2 333 364 B1**
(45) Date of publication and mention of the grant of the patent: **08.08.2012**
(21) Application number: 09015138.2
(22) Date of filing: 07.12.2009
(51) Int. Cl.: F16C 17/02, F16C 33/10

(54) **Self-lubricating composite bearing**
Selbstschmierendes mehrteiliges Gleitlager
Palier pluripartite auto-lubrifiant

(43) Date of publication of application: 15.06.2011
(73) Proprietor: Newcera Technology Co., Ltd., Brunei Darussalam (BN)
(72) Inventor: Liu, Han-Ching, Sijhih City, Taipei County (TW); Huang, Lung-Wei, Hsinchu City (TW)
(74) Representative: 2K Patentanwälte Blasberg Kewitz & Reichel

(56) References cited:
- GB-A- 1 389 857
- JP-A- 2004 144 255
- US-A- 3 917 362
- US-A1- 2006 171 618

## Description

### BACKGROUND OF THE INVENTION

### 1. Field of the Invention:

The present invention relates to a bearing for supporting a rotated shaft, and particularly to a self-lubricating composite bearing that automatically supplies lubricating media with different viscosities to form a smoothening tribology interface around the periphery of the rotated shaft even under a variety of severe operating conditions.

### 2. Description of the Related Art:

To avoid friction-induced constraints between shaft and bearing, a lubricating medium is generally applied to form a smoothening tribology interface around the periphery of the rotated shaft being supported in the bearing. However, it is inconvenient and laborious to regularly apply the lubricant to a bearing. In case the lubricating medium is not supplied in time, friction-induced heat will be generated causing insufficient lubrication and rapidly damage. To mitigate this problem, self-lubricating bearings are created. The lubricating media can be classified as lower viscosity lubricating oil and higher viscosity lubricant (including but not limited to such as grease, hybrid lubrication agent containing solid lubricating grains). Conventional self-lubricating bearings commonly use the lubricating oil for forming a tribology interface between the axial hole of the bearing and the periphery of the rotated shaft being supported in the bearing. However, the tribology interface formed by the lubricating oil has a thin thickness, limiting the side-load capacity of the bearing. Further, the higher the temperature, the lower is the viscosity of the lubricating oil, causing the tribology interface to be thinner. If the shaft is continuously rotated at a high speed and with a thinning tribology interface, the lubricating oil may be forced away from the axial hole of the bearing, causing the shaft being directly worn out or even collided with the bearing. Under such a condition, the friction-induced heat and noise will speed up the bearing damage.

On the contrary, the grease has a viscosity higher than that of the lubricating oil, forming a relatively thicker tribology interface within a bearing around the periphery of the shaft and enhancing the loading capacity of the bearing. Because of the characteristic of high viscosity, grease is commonly used in ball bearings. However, conventional ball bearing comprises many long and thin components. As compared with the self-lubricating bearing, conventional ball bearing has the drawbacks of high cost, noisy, complicated structure and weaker structural strength. When a ball bearing is applied to high temperature, high subzero temperature, high load and high speed conditions, the loading capacity, resistance against high- and low-temperature and lifespan of the ball bearing will confront a critical challenge. As compared with the ball bearing, the self-lubricating bearing has the advantages of low cost, quiet, simple structure and higher structural strength. Nevertheless, self-lubricating bearing is usually made from a porous material that is not practical for impregnating with lubricant such as grease or hybrid lubrication agent containing solid lubricating grains for forming an evenly distributed tribology interface due to poor mobility in the pores. The mobility is getting worse under a low operational temperature condition. Directly applying lubricant to the inner wall of a self-lubricating bearing for supporting a shaft in the bearing can temporarily enhance the loading capacity, however friction-induced temperature rise problems will occur soon after consuming of the applied lubricant for a high speed rotation of the shaft.

US 2006/171618A1 discloses a lubrication oil retaining assembly including two bearings (10) and a bearing sleeve (20). Each bearing (10) includes a head (11) and a neck (12) integrally formed with the head (11), a through hole (13) centrally defined through the bearing (10) and an oil retaining groove (14) defined in an inner periphery defining the through hole (13) of the bearing (10). When the two bearings (10) are combined with the bearing sleeve (20), the necks (12) of the two bearings (10) engage with each other. An oil retaining space (30) is defined by an inner periphery of the bearing sleeve (20) and an outer periphery of each of the necks (12) of the two bearings (10). A gap between two peripheral end faces of the necks (12) of the two bearings (10) communicates the oil retaining space (30) with the oil retaining groove (14) of the two bearings (10). The oil retaining space (30) is able to provide lubrication oil to the motor axle (43) via seeping into the gap. However, lubricants of a higher viscosity cannot be used on the aforesaid bearing.

GB 1389857A discloses a plastics sleeve bearing (1) including a thin-walled cylindrical member (5) and a plurality of thin-walled fins (7). The fins (7) extend circumferentially about the outside surface of the cylindrical member (5) in longitudinally spaced relationship so as to define a plurality of annular spaces (8) there between for lubricant storage. A plurality of lubrication distribution openings (11) extend though the cylindrical member (5) around the circumferentially extending surface thereof within each of the annular spaces (8), communicating the annular spaces (8) with bearing surface (6). The structure is more complex, and the possibility of mass production is lower.

Accordingly, it is desirable to provide a self-lubricating composite bearing that continuously supplies lubricating medium to form an evenly distributed tribology interface in between the shaft and bearing when applied to abnormal high- and low- temperatures, high load and high speed conditions.

### SUMMARY OF THE INVENTION

The present invention has been accomplished under the circumstances in view. It is one object of the present invention to provide a self-lubricating composite bearing, which provides lubricating medium, such as lubricating oil and lubricant (including such as grease, hybrid lubrication agent containing solid lubricating grains), storing and supplying structure for application under high temperature, low temperature (particularly to a high subzero temperature), high load and high speed conditions to fit different industrial requirements, so that an evenly distributed tribology interface can be formed within the inner wall thereof around the periphery of the shaft being supported therein to smoothen rotation of the shaft.

It is another object of the present invention to provide a self-lubricating composite bearing, which utilizes bearing members made from a lubricating oil-impregnated porous material to support a rotated shaft, and has storage rooms for storing lubricating oil, and also has storage chambers for storing lubricants having different viscosities and fine flow passages for guiding lubricants from the storage chambers to the axial hole of bearing set therein, so that the lubricants are continuously delivered from the storage chambers to the axial hole of the bearing set through the fine flow passages and the lubricating oil is forced out of the bearing set into the axial hole of the bearing set by means of a capillary force during high speed rotation of the shaft.

It is still another object of the present invention to provide a modularized design of self-lubricating composite bearing application platform, which simplifies the fabrication of bearing members, facilitates quality control of the fabrication of bearing members, and lowers the manufacturing cost of bearing members.

These and other objects of the present invention are achieved with a self-lubricating composite bearing according to claim 1. The self-lubricating composite bearing comprises a casing and a bearing set. The casing axially defines an accommodation space through two opposite ends thereof. The bearing set comprises at least two bearing member axially mounted in the accommodation space inside the casing. Each bearing member has a mounting portion located on one end thereof, a connection portion located on an opposite end thereof, a neck connected between the mounting portion and the connection portion, an axle hole axially cut through the mounting portion, the neck and the connection portion for the insertion of a shaft to be supported by the self-lubricating composite bearing, at least one storage chamber defining around the periphery of the neck within the casing and storing a lubricant, and at least one fine flow passage in fluid communication between the at least one storage chamber and the axle hole of each bearing member.

The bearing members can be made from a porous material and define with the inner wall of the casing at least one storage room for storing a lubricating oil. Thus, the lubricating oil can be delivered from the at least one storage room to the axle holes of the bearing members through the at least one fine flow passage to form the desired tribology interface around the periphery of the shaft.

Alternatively, the bearing members can be made from a lubricating oil-impregnated porous material and define with the inner wall of the casing at least one storage chamber for storing a lubricant and at least one storage room for storing a lubricating oil. Thus, the lubricant is delivered from the at least one storage chamber to the axle holes of the bearing members through the at least one fine flow passage subject to the effect of the centrifugal force produced during a high speed rotation of the shaft in the axle holes of the bearing members. In the meantime, the lubricating oil both impregnated in the porous material of the bearing members and stored in the storage room is delivered to the axle holes of the bearing members subject to the effect of the capillary force of the bearing members. Therefore, an evenly distributed tribology interface is formed in the axle holes of the bearing members around the periphery of the shaft, smoothening rotation of the shaft and prolonging the lifespan of the self-lubricating composite bearing.

To fit different application requirements under different speed, temperature and load conditions, different lubricants and different numbers and sizes of fine flow passages may be adopted for assuring excellent mobility in the fine flow passages.

Further, to fit different bearing length requirements, different application requirements and different lubrication requirements, the number, arrangement and configurations of bearing members can be relatively changed.

### BRIEF DESCRIPTION OF THE DRAWINGS

FIG. 1 is an assembled, isometric view of a self-lubricating composite bearing in accordance with a first embodiment of the present invention.

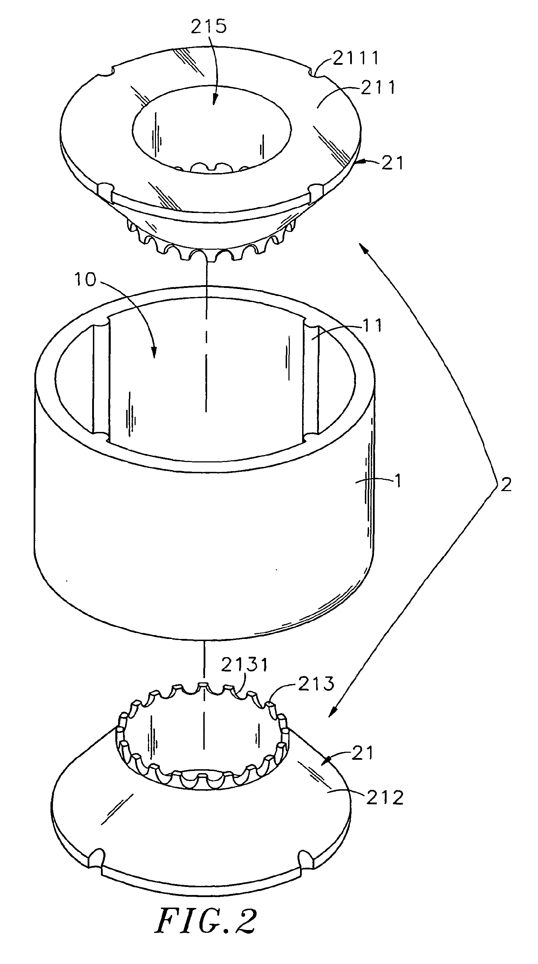

FIG. 2 is an exploded view of the self-lubricating composite bearing of FIG. 1.

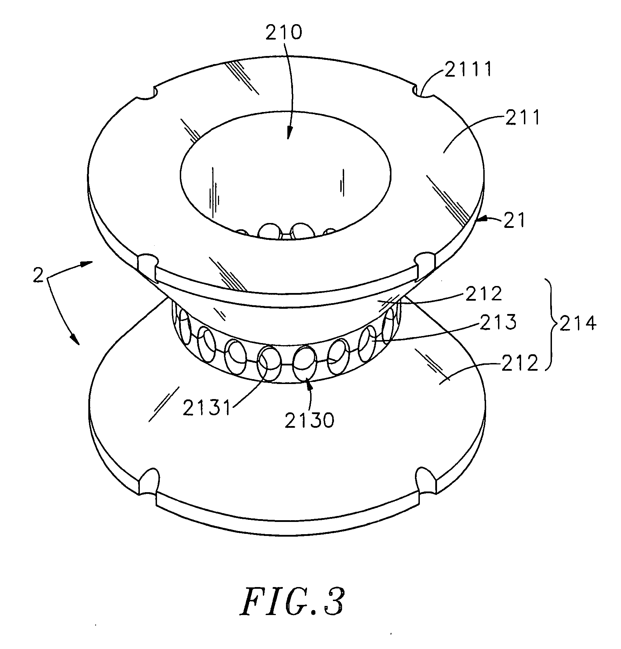

FIG. 3 is an assembled, isometric view of a bearing set of the self-lubricating composite bearing of FIG. 1.

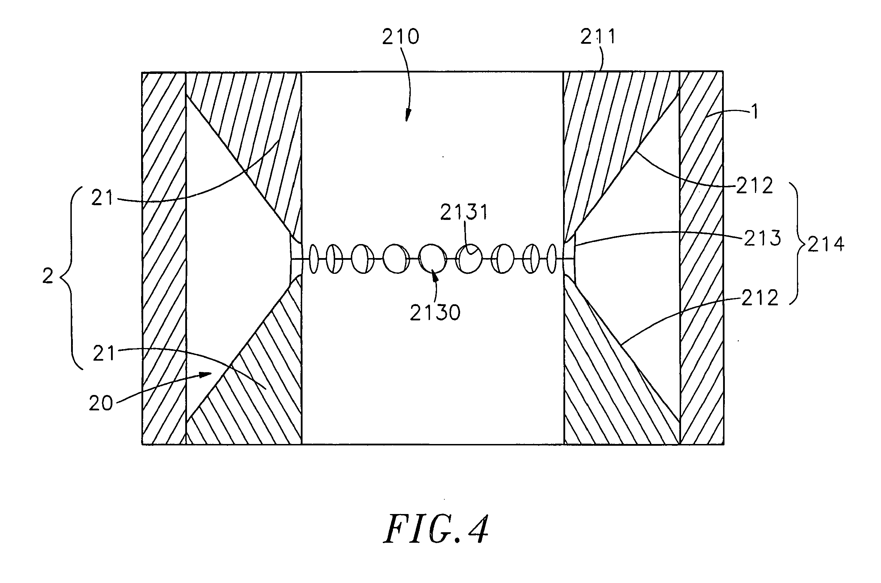

FIG. 4 is a sectional view of the self-lubricating composite bearing of FIG. 1.
FIG. 5 is another exploded sectional view of the self-lubricating composite bearing of FIG. 1.
FIG. 6 is a sectional view of a self-lubricating composite bearing in accordance with a second embodiment of the present invention.
FIG. 7 is a sectional view of a self-lubricating composite bearing in accordance with a third embodiment of the present invention.
FIG. 8 is a sectional view of a self-lubricating composite bearing in accordance with a fourth embodiment of the present invention, showing a shaft installed therein.

### DETAILED DESCRIPTION OF THE PREFERRED EMBODIMENT

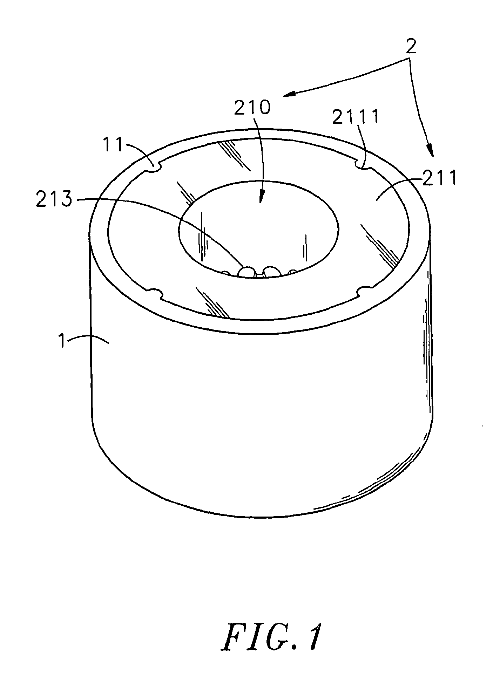

Referring to FIGs. 1∼5, a self-lubricating composite bearing according to a first embodiment includes a casing **1** and a bearing set **2.**

The casing **1** is a hollow cylindrical member made from a dense solid or porous material. The casing **1** axially defines an accommodation space **10** through two opposite ends thereof for accommodating the bearing set **2.** A plurality of ribs **11** are formed on an inner surface of the casing **1.** The ribs **11** extend along an axial direction of the casing **1** and are evenly spaced from each other around the inner surface of the casing **1.**

The bearing set **2** is mounted in the accommodation space **10** of the casing **1,** and includes two bearing members **21** made from a dense solid or porous material and axially arranged together in the casing **1.** An axial hole **210** is defined through two opposite ends of the bearing set **2** for the insertion of a shaft **3** to be supported by the self-lubricating composite bearing. The bearing member **21** has a mounting portion **211,** a connection portion **213** having an outer diameter smaller than that of the mounting portion **211,** and a neck **212** axially connected between the mounting portion **211** and the connection portion **213.** An axle hole **215** is axially defined through the mounting portion **211,** the neck **212** and the connection portion **213.** The necks **212** and connection portions **213** of the two adjacent bearing members **21** cooperatively forms the neck portion **214** of the bearing set **2.** A plurality of locating grooves **2111** are axially defined in an outer peripheral surface of the mounting portion **211** corresponding to the ribs **11** of the casing **1** for respectively receiving the ribs **11** of the casing **1** therein. The mounting portion **211** of each bearing member **21** fits the inner diameter of the casing **1,** i.e., the configuration of the mounting portion **211** fits the cross section of the accommodation space **10** so that the mounting portion **211** can be press-fitted into the casing **1** tightly.

After installation of the two bearing members **21** in the casing **1,** a storage chamber **20** is defined between the inner surface of the casing **1** and an outer surface of a neck portion **214** of the bearing set **2** within the accommodation space **10** for storing a higher viscosity lubricant therein. The axle holes **215** of the two bearing members **21** cooperatively define an axial hole **210** of the bearing set **2** for the insertion of a shaft **3.** A plurality of fine flow passages **2130** are defined through a middle of the neck portion **214** of the bearing set **2.** The storage chamber **20** is in fluid communication with the axial hole **210** of the bearing set **2** via the fine flow passages **2130.** The lubricant can be any substance to be introduced between an inner surface of the bearing set **2** and an outer surface of the shaft **3** to reduce the friction between them, improving efficiency and reducing wear. For instance, the lubricant can be a liquid lubricant containing 90% base lubricating oil and less than 10% additives. Alternatively, the lubricant can be grease, a hybrid lubrication agent containing solid lubricating grains or any of a variety of lubricants.

According to this embodiment, the two bearing members **21** of the bearing set **2** are separately made. The neck **212** of each bearing member **21** is shaped like a hollow truncated cone, sloping inwardly from the mounting portion **211** toward the connection portion **213.** The connection portion **213** is located on the contracted end of the neck **212.** The connection portion **213** is annular shaped and defines a plurality of semicircular notches **2131** at a free end thereof. When the two bearing members **21** are arranged together in the casing **1** with the connection portion **213** of one bearing member **21** abutting against the connection portion **213** of the other bearing member **21,** the notches **2131** of the one bearing member **21** are respectively abutted against the notches **2131** of the other bearing member **21,** thereby forming the fine flow passages **2130.** Thus, when the casing **1** and the bearing set **2** are assembled, the desired storage chamber **20** is defined within the casing **1** around the necks **212** of the two bearing members **21** for storing the lubricant. Further, the notches **2131** can be elongated to a certain extent toward the mounting portion **211** of the bearing member **21** to guide distribution of the lubricant from the storage chambers **20** to the axial hole **210** of the bearing set **2** for forming an evenly distributed tribology interface around the periphery of the shaft (not shown) that is rotatably inserted through the axial hole **210.**

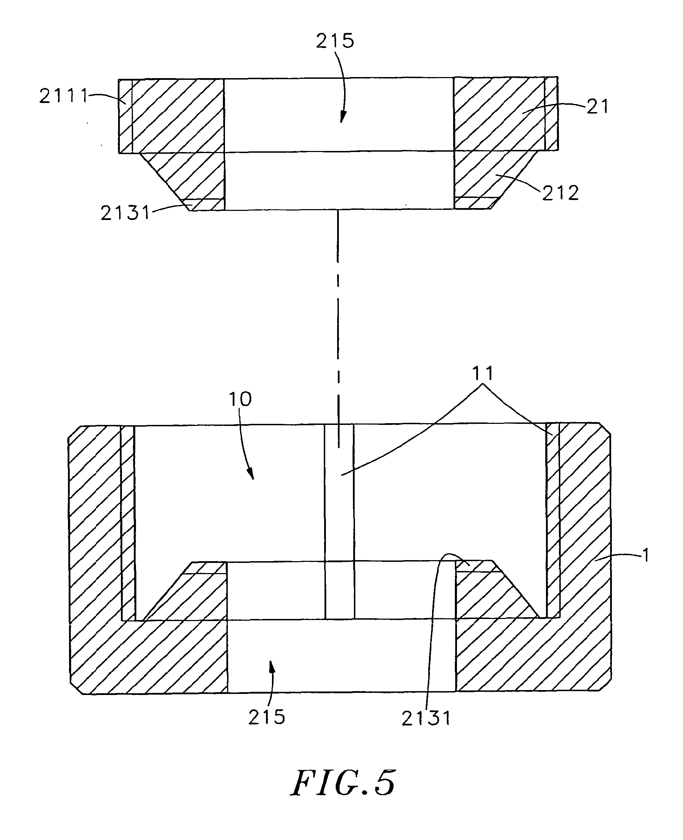

The configuration of the storage chamber **20** is determined subject to the configuration of the necks **212** of the two bearing members **21.** By means of changing the configuration of the necks **212** of the bearing members **21,** the configuration of the storage chamber **20** is relatively changed. Therefore, the storage chamber **20** can be configured to show a triangular, rectangular, or arched cross section. Further, as illustrated in FIG. 5, one of the bearing members **21** of the bearing set **2** and the casing **1** can be integrally formed as a monolithic piece.

During rotation of the shaft **3** that is mounting in the axial hole **210** of the bearing set **2,** friction-induced heat is produced, causing the lubricant to expand. At this time, the viscosity of the lubricant is lowered, and the mobility of the lubricant is enhanced. Thus, the lubricant flows from the storage chamber **20** through the fine flow passages **2130** into the axial hole **210** to lubricate the shaft **3.** Further, the centrifugal force produced subject to rotation of the shaft **3** causes the pressure at the inner side of the fine flow passages **2130** that faces the axial hole **210** to become lower than the pressure at the outer side of the fine flow passages **2130** that faces the storage chamber **20.** This pressure difference enhances flowing of the lubricant from the storage chamber **20** toward the axial hole **210** to form a tribology interface between the shaft **3** and the axial hole **210.** The tribology interface thus formed has a thickness much greater than that formed in a conventional self-lubricating bearing having approximately the same size.

Further, if the bearing members **21** are made from a lubricating oil-impregnated porous material, the production of friction-induced heat during rotation of the shaft **3** in the axial hole **210** causes the lubricating oil impregnated in the capillaries of the bearing members **21** to expand and to be forced out of the capillaries of the bearing members **21** to the inside of the axial hole **210** by the capillary force, thereby forming a tribology interface around the periphery of the shaft **3.** Flowing of the lubricating oil toward the axial hole **210** enhances lubrication of the shaft **3,** preventing overheating. Thus, the self-lubricating composite bearing of the present invention automatically supplies the lubricant stored in the storage chamber **20** and the lubricating oil impregnated in the capillaries of the bearing members **21,** and therefore the invention greatly prolongs the lifespan of the self-lubricating composite bearing and enhances the support of the self-lubricating composite bearing to the shaft **3.**

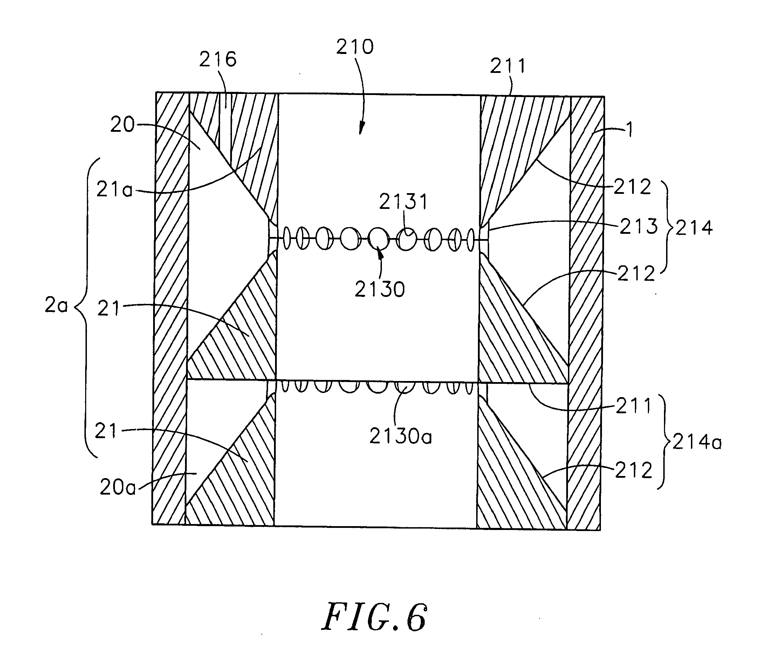

FIG. 6 is a sectional view of a self-lubricating composite bearing in accordance with a second embodiment of the present invention. A bearing set **2a** in according to this second embodiment comprises three bearing members **21, 21a** axially arranged together in the accommodation space **10** of the casing **1.** At least one tiny hole **216** is defined through the mounting portion **211** and the neck **212** of a bearing member **21a.** The other two bearings **21** are substantially similar to the aforesaid first embodiment. After installation of the bearing set **2a** in the casing **1,** two storage chambers **20, 20a** are defined between the inner surface of the casing **1** and the outer surface of two neck portions **214, 214a** of the bearing set **2a** for storing a higher viscosity lubricant therein. In such a way, the mobility of the lubricant in the storage chamber **20** can be enhanced by making the storage chamber **20** in fluid communication with the environment via the at least one air passage, such as the tiny through hole **216** at the mounting portion **211** of the bearing member **21a.** In fact, the at least one tiny hole **216** also can be defined in all three bearing members **21, 21a** or two bearing members of the bearing set **2a** for assuring excellent mobility of the lubricant in the fine flow passages **2130, 2130a.**

If the bearing members **21, 21a** according to this second embodiment have the same length as the aforesaid first embodiment, the self-lubricating composite bearing of this second embodiment provides a relatively longer bearing length of support to the shaft 3. To provide the same bearing length of support to the shaft **3** as the aforesaid first embodiment, the bearing members **21, 21a** of the bearing set **2a** must be made shorter than that of the aforesaid first embodiment. When placing the bearing set **2a** in the casing **1,** each two adjacent bearing members can be arranged in the same direction and connected in series, or reversely abutted against each other.

When two adjacent bearing members **21** (particularly, the upper bearing member **21a** and the middle bearing member **21)** are reversely abutted against each other, the connection portion **213** of one of the bearing members **21a** is abutted against the connection portion **213** of the other of the bearing members **21** so that the notches **2131** of the connection portions **213** of the two adjacent bearing members **21, 21a** form fine flow passages **2130,** where the number of the fine flow passages **2130** is equal to the number of the notches **2131** of the connection portion **213** of each bearing member, and the cross-sectional area of each fine flow passage **2130** is double the dimension of each of the notches **2131.** At this time, the necks **212** and the connection portions **213** of the two adjacent bearing members **21, 21a** cooperatively form a neck portion **214** of the bearing set **2a.** Therefore, a storage chamber **20** with the same capacity of the aforesaid first embodiment is defined within the accommodation space **10** of the casing **1** around the neck portion **214** of the two adjacent bearing members **21, 21a** that are reversely abutted against each other.

Further, when two adjacent bearing members **21** (particularly, the middle bearing member **21** and the lower bearing member **21)** are arranged in the same direction and connected in series, the connection portion **213** of one of the bearing members **21** is abutted against the mounting portion **211** of the other of the bearing members **21,** so that the notches **2131** of the connection portion **213** of one of the bearing members **21** and the mounting portion **211** of the other bearing member **21** cooperatively define a plurality of fine flow passages **2130a,** where the number and cross-sectional area of the fine flow passages **2130a** are equal to the number and cross-sectional area of notches **2131** of the connection portion **213** of one of the bearing members **21.** At this time, the neck **212** and the connection portion **213** of the lower bearing member **21** cooperatively form another neck portion **214a** of the bearing set **2a.** A storage chamber **20a** is defined within the accommodation space **10** of the casing **1** around the neck **212** of the one of the bearing members **21** that is abutted against the mounting portion **211** of the other of the bearing members **21.** The capacity of the storage chamber **20a** is one half of the capacity of the storage chamber **20** defined around the neck portion **214a** of the two adjacent bearing members **21** that are arranged in the same direction and connected in series.

To maintain the same bearing length, the length of the bearing members **21, 21a** of the bearing set **2a** can be relatively shortened when the number of the bearing members is increased. By means of increasing the number of the bearing members without changing the bearing length and by means of arranging each two adjacent bearing members in the same direction or two reversed directions, the number of storage chambers **20, 20a** can be relatively increased. When the shaft **3** that is supported in the axial hole **210** of the bearing set **2a** is rotating, the lubricant is continuously supplied from the storage chambers **20, 20a.** The lubricating oil is also continuously supplied from the capillaries of the lubricating oil impregnated in the bearing members **21, 21a** to form an evenly distributed tribology interface around the periphery of the shaft **3,** prohibiting abnormal rise of temperature, enhancing bearing power and prolonging the lifespan of the self-lubricating composite bearing.

In this embodiment, the three bearing members **21, 21a** of the bearing set **2a** are separately made. Further, at least one of the three bearing members **21, 21a** of the bearing set **2a** and the casing **1** can be integrally formed as a monolithic piece.

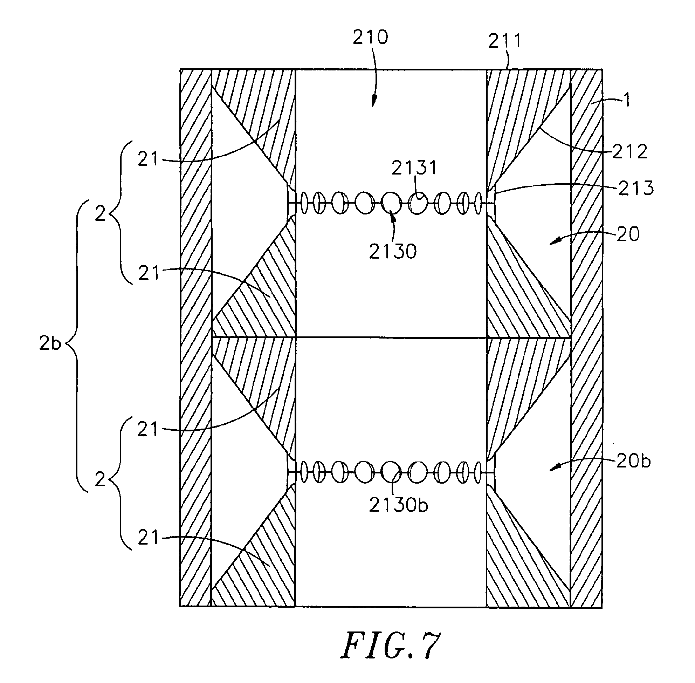

FIG. 7 is a sectional view of a self-lubricating composite bearing in accordance with a third embodiment of the present invention. This third embodiment is substantially similar to the aforesaid first and second embodiments with the exception that the bearing set **2b** according to this third embodiment comprises four bearing members **21.** According to this third embodiment, the four bearing members **21** are arranged in two sets connected in series. Each of the sets is defined a bearing set **2** similar to the aforesaid first embodiment. The two adjacent bearing members **21** of each of the two sets reversely abutted against each other so that two storage chambers **20, 20b** of equal capacity are defined within the casing **1** around the necks **212** of the two adjacent bearing members **21.** Further, two sets of fine flow passages **2130, 2130b** are respectively defined in the two sets of bearing members **21** in fluid communication between the two storage chambers **20, 20b** and the axial hole **210** of the bearing set **2b** to guide distribution of the lubricant from the storage chambers **20, 20b** to the axial hole **210** of the bearing set **2b** for forming an evenly distributed tribology interface around the periphery of the shaft (not shown) that is rotatably inserted through the axial hole **210.**

In this embodiment, the four bearing members **21** of the bearing set **2b** are separately made. Further, at least one of the four bearing members **21** of the bearing set **2b** and the casing **1** can be integrally formed as a monolithic piece.

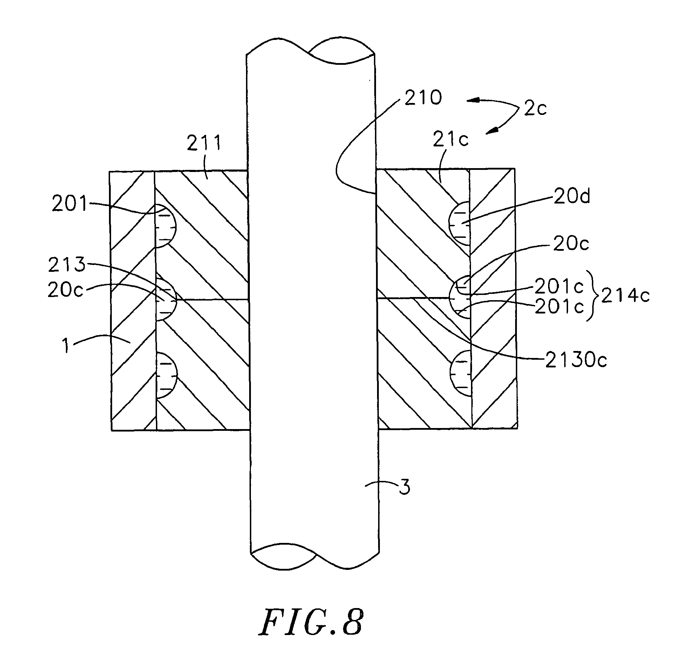

FIG. 8 is a sectional view showing a shaft **3** installed in a self-lubricating composite bearing in accordance with a fourth embodiment of the present invention. According to this fourth embodiment, each of the two bearing members **21c** is made from lubricating oil-impregnated porous material and forms a first neck **201** at a middle thereof and a second neck **201c** at an end thereof. At this time, the second necks **201c** of the two bearing members **21c** cooperatively form a neck portion **214c** of the bearing set **2c.** A storage chamber **20c** is defined between the inner surface of the casing **1** and an outer surface of the second necks **201c** of the two bearing members **21c.** A storage room **20d** is defined between the inner surface of the casing **1** and an outer surface of the first neck **201** of each of the two bearing members **21c.** The middle storage chamber **20c** around the second necks **201c** of the two bearing members **21c** is adapted for storing a higher viscosity lubricant such as grease or a hybrid lubrication agent containing solid lubricating grains. Two storage rooms **20d** each around the first neck **201** of one of the two bearing members **21c** are adapted for storing lubricating oil. Further, fine flow passages **2130c** are defined in the bearing set **2c** in fluid communication between the middle storage chamber **20c** and the axial hole **210** of the bearing set **2c.** In this embodiment, the fine flow passages **2130c** are gaps between two adjacent bearing members **21c.** During operation, the lubricant and the lubricating oil are continuously supplied to the axial hole **210** to form a tribology interface around the periphery of the shaft **3,** smoothening rotation of the shaft **3** and prolonging the lifespan of the self-lubricating composite bearing.

According to the aforesaid embodiments of the present invention, an equivalent/hydraulic diameter of the fine flow passages of the self-lubricating composite bearing is not smaller than 0.01 millimeter and not larger than (1.6D*T/n)^{0.5} millimeter, where the symbol D indicates a diameter in millimeter of the axial hole **210** of the bearing set **2, 2a, 2b, 2c,** the symbol T indicates an axial length in millimeter of the axial hole **210** of the bearing set **2, 2a, 2b, 2c,** (i.e., an axial length summation of the axle holes **215** of the bearing members **21, 21a, 21c),** and the symbol n indicates a number of the fine flow passages **2130, 2130a, 2130b, 2130c.**

In conclusion, the invention provides a self-lubricating composite bearing that continuously supplies a lubricant and a lubricating oil to form a uniformly distributed tribology interface in the axle holes **215** of the bearing members **21, 21a, 21c** around the periphery of the shaft **3** during rotation of the shaft **3** in the axial hole **210.** Subject to the desired bearing length to support the shaft **3,** the number and configurations of the bearing members **21, 21a, 21c** can be changed. The bearing members **21, 21a, 21c** can be made having a conical profile (see the embodiments from the first to the third), a rhombic or cylindrical shape (see the fourth embodiment) configuration, Further, each two adjacent bearing members **21, 21a, 21c** can be arranged in the same direction and connected in series, or reversely abutted against each other. Also, one storage chamber **20,** or multiple storage chambers **20, 20a, 20b, 20c** are defined in the casing **1** around the necks **212, 201c** of the bearing members **21, 21a, 21c** and disposed in fluid communication with the axle holes **215** of the bearing members **21, 21a, 21c** through fine flow passages **2130, 2130a, 2130b, 2130c.** At least one storage room **20d** is defined in the casing **1** around the first neck **201** of the bearing members **21c** and disposed in fluid communication with the axle holes **215** of the bearing members **21c** through the lubricating oil-impregnated in the capillaries of the bearing members **21c.** So that a variety of lubricants and lubricating oil having different viscosities can be continuously supplied to the axial hole **210** to form a tribology interface in the axial hole **210** around the periphery of the shaft **3.**

It is to be understood, however, that even though numerous characteristics and advantages of the present invention have been set forth in the foregoing description, together with details of the structure and function of the embodiments, the disclosure is illustrative only, and changes may be made in detail, especially in matters of shape, size, and arrangement of parts within the principles of the invention to the full extent indicated by the broad general meaning of the terms in which the appended claims are expressed.

### BRIEF DESCRIPTION OF THE DRAWINGS

| Applicant : Newcera Technology Co., Ltd. | |
|---|---|
| Patent Tittle SELF-LUBRICATING COMPOSITE BEARING | |
| 1- casing | 2- bearing set |
| 10- accommodation space | 2a- bearing set |
| 11- rib | 2b- bearing set |
| | 2C- bearing set |
| | 20- storage chamber |
| | 20a- storage chamber |
| | 20b- storage chamber |
| | 20c- storage chamber |
| | 20d- storage room |
| | 201- first neck |
| | 201c-second neck |
| | 21- bearing member |
| | 21a- bearing member |
| | 21c- bearing member |
| | 210- axial hole |
| | 211- mounting portion |
| | 2111-groove |
| | 212- neck |
| | 213- connection portion |
| | 2131-notch |
| | 2130-fine flow passage |
| | 2130a- fine flow passage |
| | 2130b- fine flow passage |
| | 2130c- fine flow passage |
| | 214- neck portion |
| | 214a- neck portion |
| | 214c- neck portion |
| | 215-axle hole |
| 3- shaft | 216- tiny hole |

## Claims

1. A self-lubricating composite bearing comprising:
a casing (1) axially defining an accommodation space (10) through two opposite ends thereof; and
a bearing set (2, 2a, 2b) comprising a plurality of separate bearing members (21, 21a) mounted in the accommodation space (10) of the casing (1), an axial hole (210) being defined through two opposite ends of the bearing set (2, 2a, 2b) for the insertion of a shaft (3) to be supported by the self-lubricating composite bearing, each bearing member (21, 21a) having a mounting portion (211) and a neck (212) axially extended from the mounting portion (211), an outer peripheral surface of the neck (212) having smaller radial dimension than an outer peripheral surface of the mounting portion (211), each bearing member (21, 21a) further has a connection portion (213) at an end of the neck (212) on the opposite side of the mounting portion (211), an axle hole (215) being axially defined through two opposite ends of each bearing member (21, 21a), the axial hole (210) of the bearing set (2, 2a, 2b) being formed by the axle holes (215) of the bearing members (21, 21a), the bearing members (21, 21a) being axially arranged together with one of the bearing member (21, 21a) abutting against another adjacent bearing member (21, 21a), at least one storage chamber (20, 20a, 20b) being defined between an inner surface of the casing (1) and an outer surface of the neck (212) of at least one of the adjacent bearing member (21, 21a), the at least one storage chamber (20, 20a, 20b) storing a higher viscosity lubricant therein, the storage chamber (20, 20a, 20b) being in fluid communication with the axial hole (210) of the bearing set (2, 2a, 2b),
**characterized in that** a plurality of notches (2131) are defined in a free end of the connection portion (213) of each bearing member (21, 21a), the notches (2131) of the adjacent bearing members (21, 21a) forming a plurality of fine flow passages (2130, 2130a, 2130b), and the storage chamber (20, 20a, 20b) being in fluid communication with the axial hole (210) of the bearing set (2, 2a, 2b) via the fine flow passages (2130, 2130a, 2130b).

2. The self-lubricating composite bearing as claimed in claim 1, **characterized in that** the mounting portion (211) of each bearing member (21, 21a) fits the cross section of the accommodation space (10) of the casing (1), the mounting portion (211) of each bearing member (21, 21a) being press-fitted into the casing (1) tightly.

3. The self-lubricating composite bearing as claimed in claim 1, **characterized in that** at least one rib (11) is formed on an inner surface of the casing (1) and extends along an axial direction of the casing (1), at least one groove (2111) being axially defined in an outer peripheral surface of the mounting portion (211) of each bearing member (21, 21a) corresponding to each of the at least one rib (11) of the casing (1) for receiving the at least one rib (11) of the casing (1) therein.

4. The self-lubricating composite bearing as claimed in claim 1, **characterized in that** at least two of the bearing members (21, 21a) are arranged adjacently and reversely, and have the respective connection portions (213) abutted against each other.

5. The self-lubricating composite bearing as claimed in claim 4, **characterized in that** the notches (2131) of one of the two adjacent bearing members (21, 21a) match the notches (2131) of the other of the two adjacent bearing members (21, 21a) to form the fine flow passages (2130, 2130b), the at least one storage chamber (20, 20b) being defined between the inner surface of the casing (1) and outer surfaces of the necks (212) of the two adjacent bearing members (21, 21a).

6. The self-lubricating composite bearing as claimed in claim 1, **characterized in that** at least two of the bearing members (21, 21a) are arranged adjacently and uni-directionally, and have the connection portion (213) of one of the two adjacent bearing members (21, 21a) abutted against the mounting portion (211) of the other of the two adjacent bearing members (21, 21a).

7. The self-lubricating composite bearing as claimed in claim 6, **characterized in that** the notches (2131) of one of the two adjacent bearing members (21, 21a) abut against the mounting portion (211) of the other of the two adjacent bearing members (21, 21a) to form the fine flow passages (2130a), the at least one storage chamber (20a) being defined between the inner surface of the casing (1) and an outer surface of the neck (212) of the one of the bearing member (21, 21a) which has the connection portion (213) abutted against the mounting portion (211) of the other of the adjacent bearing member (21, 21a).

8. The self-lubricating composite bearing as claimed in claim 1, **characterized in that** one of the bearing members (21, 21a) of the bearing set (2, 2a, 2b) and the casing (1) are integrally formed as a monolithic piece.

9. The self-lubricating composite bearing as claimed in claim 1, **characterized in that** an average equivalent/hydraulic diameter of the fine flow passages (2130, 2130a, 2130b) of the self-lubricating composite bearing is not smaller than 0.01 millimeter and not larger than (1.6D*T/n)^{0.5} millimeter, where the symbol D indicates a diameter in millimeter of the axial hole (210) of the bearing set (2, 2a, 2b), the symbol T indicates an axial length in millimeter of the axial hole(210) of the bearing set(2, 2a, 2b), and the symbol n indicates a number of the at least one fine flow passage (2130, 2130a, 2130b).

10. The self-lubricating composite bearing as claimed in claim 1, **characterized in that** the lubricant stored in the storage chamber (20, 20a, 20b) is grease.

11. The self-lubricating composite bearing as claimed in claim 1, **characterized in that** the lubricant stored in the storage chamber (20, 20a, 20b) is a hybrid lubrication agent containing solid lubricating grains.

12. The self-lubricating composite bearing as claimed in claim 1, **characterized in that** the storage chamber (20, 20a, 20b) is in fluid communication with the environment via at least one tiny hole (216), the at least one tiny hole (216) being defined through two opposite ends of each bearing member (21, 21a) to fill adequate lubricant into the storage chamber (20, 20a, 20b) via the fine flow passages (2130, 2130a, 2130b).

## Patentansprüche

1. Selbstschmierendes zusammengesetztes Lager, umfassend:
ein Gehäuse (1), das mittels zweier einander gegenüberliegender Enden axial einen Aufnahmeraum (10) festlegt; und
einen Lagersatz (2, 2a, 2b) mit einer Mehrzahl von getrennten Lagerelemente (21, 21a), die in den Aufnahmeraum (10) des Gehäuses (1) eingesetzt sind, einer axialen Bohrung (210), die mittels der zwei einander gegenüberliegender Enden des Lagersatzes (2, 2a, 2b) zum Einführen einer Welle (3) festgelegt ist, um von dem selbstschmierenden zusammengesetzten Lager gelagert zu werden, wobei jedes Lagerelement (21, 21a) einen Montageabschnitt (211) und einen Hals (212) aufweist, der axial von dem Montageabschnitt (211) abragt, eine äußere Umfangsfläche des Halses (212) eine kleinere radiale Abmessung aufweist als einer äußeren Umfangsfläche des Montageabschnitts (211), jedes Lagerelement (21, 21a) ferne einen Verbindungsabschnitt (213) an einem Ende des Halses (212) auf der gegenüberliegenden Seite des Montageabschnitts (211) aufweist, ein Achsloch (215) von den zwei einander gegenüberliegende Enden eines jeden Lagerelements (21, 21a) axial festgelegt ist, das Achsloch (210) des Lagersatzes (2, 2a, 2b) von den Achslöchern (215) der Lagerelemente (21, 21a) ausgebildet ist, die Lagerelemente (21, 21a) gemeinsam axial angeordnet sind, wobei eines der Lagerelemente (21, 21a) gegen ein anderes benachbartes Lagerelement (21, 21a) anliegt, wenigstens ein Speicherraum (20, 20a, 20b) zwischen einer inneren Oberfläche des Gehäuses (1) und einer äußeren Oberfläche des Halses (212) von mindestens einem der benachbarten Lagerelemente (21, 21a) festgelegt ist, der mindestens eine Speicherraum (20, 20a, 20b) ein Schmiermittel mit einer hohen Viskosität aufnimmt, der Speicherraum (20, 20a, 20b) mit dem Achsloch (210) des Lagersatzes (2, 2a, 2b) in Verbindung steht,
**dadurch gekennzeichnet, dass** eine Mehrzahl von Kerben (2131) in einem freien Ende des Verbindungsabschnitts (213) eines jeden Lagerelements (21, 21a) festgelegt sind, die Kerben (2131) von benachbarten Lagerelementen (21, 21a) eine Mehrzahl von feinen Strömungskanälen (2130, 2130a, 2130b) ausbildet und der Speicherraum (20, 20a, 20b) mit dem Achsloch (210) des Lagersatzes (2, 2a, 2b) über die feinen Strömungskanäle (2130, 2130a, 2130b) in Verbindung steht.

2. Selbstschmierendes zusammengesetztes Lager nach Anspruch 1, **dadurch gekennzeichnet, dass** der Montageabschnitt (211) eines jeden Lagerelements (21, 21a) an den Querschnitt des Aufnahmeraums (10) des Gehäuses (1) angepasst ist, wobei der Montageabschnitt (211) eines jeden Lagerelements (21, 21a) in das Gehäuse (1) fest eingepresst ist.

3. Selbstschmierendes zusammengesetztes Lager nach Anspruch 1, **dadurch gekennzeichnet, dass** mindestens eine Rippe (11) auf einer inneren Oberfläche des Gehäuses ausgebildet ist (1) ist und sich entlang einer axialen Richtung des Gehäuses (1) erstreckt, wobei mindestens eine Nut (2111) axial in einer äußeren Umfangsfläche des Montageabschnitts (211) eines jeden Lagereleemnts (21, 21a) entsprechend jeder der mindestens eine Rippe (11) des Gehäuses (1) zur Aufnahme der mindestens einen Rippe (11) des Gehäuses (1) darin festgelegt ist.

4. Selbstschmierendes zusammengesetztes Lager nach Anspruch 1, **dadurch gekennzeichnet, dass** mindestens zwei der Lagerelemente (21, 21a) benachbart und umgekehrt zueinander angeordnet sind und die jeweiligen Montageabschnitte (213) unmittelbar aneinander anliegen.

5. Selbstschmierendes zusammengesetztes Lager nach Anspruch 4, **dadurch gekennzeichnet, dass** die Kerben (2131) eines der beiden benachbarten Lagerelemente (21, 21a) an die Kerben (2131) des anderen der beiden benachbarten Lagerelemente (21 , 21a) angepasst ist, um die feinen Strömungskanäle (2130, 2130B) auszubilden, wobei der mindestens eine Speicherraum (20, 20b) zwischen der inneren Oberfläche des Gehäuses (1) und äußeren Oberflächen des Halses (212) der zwei benachbarten Lagerelemente (21, 21a) festgelegt ist.

6. Selbstschmierendes zusammengesetztes Lager nach Anspruch 1, **dadurch gekennzeichnet, dass** mindestens zwei der Lagerelemente (21, 21a) benachbart und unidirektional angeordnet sind und dabei der Montageabschnitt (213) eines der zwei benachbarten Lagerelemente (21, 21a) unmittelbar gegen den Montageabschnitt (211) des anderen der beiden benachbarten Lagerelemente (21, 21 a) anliegt.

7. Selbstschmierendes zusammengesetztes Lager nach Anspruch 6, **dadurch gekennzeichnet, dass** die Kerben (2131) eines der beiden benachbarten Lagerelemente (21, 21a) unmittelbar an dem Montageabschnitt (211) des anderen der beiden benachbarten Lagerelemente (21, 21a) anliegt, um die feinen Strömungskanäle (2130a) auszubilden, wobei der mindestens eine Speicherraum (20a) zwischen der inneren Oberfläche des Gehäuses (1) und einer Außenfläche des Halses (212) des einen Lagerelements (21, 21a) ausgebildet ist, wobei dessen Montageabschnitt hat (213) unmittelbar an dem Montageabschnitt (211) des anderen der benachbarten Lagerelemente (21, 21 a) anliegt.

8. Selbstschmierendes zusammengesetztes Lager nach Anspruch 1, **dadurch gekennzeichnet, dass** eines der Lagerelemente (21, 21a) des Lagersatzes (2, 2a, 2b) und das Gehäuse (1) einstückig als ein monolithisches Bauteil ausgebildet sind.

9. Selbstschmierendes zusammengesetztes Lager nach Anspruch 1, **dadurch gekennzeichnet, dass** ein durchschnittlicher äquivalenter/hydraulischer Durchmesser der feinen Strömungskanäle (2130, 2130a, 2130b) des selbstschmierenden zusammengesetzten Lagers nicht kleiner als 0,01 mm und nicht größer als (1.6D * T / n) ^{0,5} Millimeter ist, wobei das Symbol D einen Durchmesser in Millimetern des Achslochs (210) des Lagersatzes (2, 2a, 2b) bezeichnet, das Symbol T eine axiale Länge in Millimetern des Achslochs (210) des Lagersatzes (2, 2a, 2b) bezeichnet und das Symbol n eine Zahl des mindestens einen feinen Strömungskanals (2130, 2130a, 2130b) bezeichnet.

10. Selbstschmierendes zusammengesetztes Lager nach Anspruch 1, gekennzeichnet, dass das Schmiermittel in der Vorratskammer (20, 20a, 20b) gespeichert Fett ist **dadurch gekennzeichnet**.

11. Selbstschmierendes zusammengesetztes Lager nach Anspruch 1, **dadurch gekennzeichnet, dass** das Schmiermittel, das in dem Speicherraum (20, 20a, 20b) aufgenommen ist, ein Schmierfett ist.

12. Selbstschmierendes zusammengesetztes Lager nach Anspruch 1, **dadurch gekennzeichnet, dass** der Speicherraum (20, 20a, 20b) mit der Umgebung über mindestens eine kleine Öffnung (216) in Verbindung steht, wobei die mindestens eine kleine Öffnung (216) durch zwei einander gegenüberliegende Enden eines jeden Lagerelements (21, 21a) festgelegt ist, um über die feinen Strömungskanäle (2130, 2130a, 2130b) eine ausreichende Menge an Schmiermittel in den Speicherraum (20, 20a, 20b) einzubringen.

## Revendications

1. Un palier autolubrifiant composite comprenant une enveloppe (1) définissant axialement un espace de réservation (10) entre deux extrémités opposées; et un jeu de palier (2, 2a, 2b) comprenant plusieurs éléments de palier séparés (21, 21a) montés au sein de l'espace de réservation (10) de l'enveloppe (1), un orifice axial (210) étant défini au travers de deux extrémités opposées du jeu de palier (2, 2a, 2b) pour l'insertion d'un arbre (3) devant être supporté par le palier autolubrifiant composite, chacun des éléments de palier (21, 21a) ayant une partie de montage (211) et une portion de goulot (212) s'étendant axialement depuis la partie de montage (211), une surface périphérique extérieure de la portion de goulot (212) présentant une dimension radiale plus petite que surface périphérique extérieure de la portion de montage (211), chacun des éléments de palier (21, 21a) présentant en outre une partie de connexion (213) à l'extrémité de la portion de goulot (212) sur le côté opposé de la partie de montage (211), un orifice axial (215) étant axialement défini au travers deux extrémités opposées de chacun des éléments de palier (2, 2a, 2b) , l'orifice axial (210) du jeu de palier (2, 2a, 2b) étant formé par les orifices axiaux (215) des éléments de paliers (21, 21a), les éléments de palier (21, 21a) étant disposés axialement de manière à abouter contre un autre élément de palier adjacent (21, 21a) , définissant au moins une chambre de stockage (20, 20a, 20b) entre la surface intérieure de l'enveloppe (1) et une surface extérieure de la portion de goulot (212) d'au moins un des éléments de palier adjacent (21, 21a), ladite chambre de stockage (20, 20a, 20b) stockant un lubrifiant à haute viscosité, la chambre de stockage (20, 20a, 20b) permettant la communication de fluide avec l'orifice axial (210) du jeu de palier (2, 2a, 2b),
**caractérisé en ce que** plusieurs encoches (2131) sont définies à une extrémité libre de la partie de connexion (213) de chacun des éléments de palier (21, 21a), les encoches (2131) de deux éléments de palier adjacents (21, 21a) formant une pluralité de passages d'écoulement fin (2130 2130a, 2130b) et la chambre de stockage (20, 20a, 20b) permettant une communication de fluides avec l'orifice axial (210) du jeu de palier (2, 2a, 2b) au travers les passages d'écoulement fin (2130, 2130a, 2130b).

2. Le palier autolubrifiant composite tel que revendiqué dans la revendication 1, **caractérisé en ce que** la partie de montage (211) de chacun des éléments de palier (21, 21a) correspond à la section transversale de l'espace de réservation (10) de l'enveloppe (1), la partie de montage (211) de chacun des éléments de palier (21, 21 a) étant bloquée par force à l'intérieur de l'enveloppe.

3. Le palier autolubrifiant composite tel que revendiqué dans la revendication 1, **caractérisé en ce qu'**au moins une nervure (11) apparaît sur une surface interne de l'enveloppe (1) et s'étend axialement le long de l'enveloppe, au moins une encoche (2111) étant définie de manière axiale sur la surface périphérique extérieure de la partie de montage (211) de chacun des éléments de palier (21, 21a) correspondants à ladite nervure (11) de l'enveloppe pour la réservation d'au moins une nervure (11) de l'enveloppe (1).

4. Le palier autolubrifiant composite tel que revendiqué dans la revendication 1, **caractérisé en ce qu'**au moins deux des éléments de palier (21, 21a) sont disposés de manière adjacente et opposée, et ayant les parties de connexion respectives (213) aboutant les unes aux autres.

5. Le palier autolubrifiant composite tel que revendiqué dans la revendication 4, **caractérisé en ce que** les encoches (2131) de l'un des deux éléments de support adjacent (21, 21 a) correspondent aux encoches (2131) de l'autre des deux éléments de palier adjacents (21, 21a) pour délimiter les passages d'écoulement fin (2130, 2130b), la chambre de stockage au moins (20, 20b) étant définie entre la surface intérieure de l'enveloppe (1) et les surfaces extérieures des portions de goulot (212) de deux éléments de palier adjacents (21, 21 a).

6. Le palier autolubrifiant composite tel que revendiqué dans la revendication 1, **caractérisé en ce que**, **caractérisé en ce que** au moins deux éléments de palier (21, 21a) sont disposés de manière adjacente et unidirectionnelle, et présentent une partie de connexion (213) de l'un des deux éléments de palier adjacents (21, 21a) aboutant contre la partie de montage (211) de l'autre éléments de palier adjacent (21, 21a).

7. Le palier autolubrifiant composite tel que revendiqué dans la revendication 6, **caractérisé en ce que** les encoches (2131) de l'un des deux éléments de palier adjacents (21, 21a) aboutent la partie de montage (211) de l'autre élément de palier adjacent (21, 21a) pour délimiter les passages d'écoulement fin (2130a), ladite chambre de stockage (20a) étant définie entre la surface intérieure de l'enveloppe (1) et la surface extérieure de la portion de goulot (212) de l'un des éléments de palier (21, 21a) qui présente la partie de connexion (213) aboutant contre la partie de montage (211) de l'autre élément de palier adjacent (21, 21a).

8. Le palier autolubrifiant composite tel que revendiqué dans la revendication 1, **caractérisé en ce que** l'un des éléments de palier (21, 21a) du jeu de palier (2, 2a, 2b) et l'enveloppe (1) sont formés d'une seule pièce.

9. Le palier autolubrifiant composite tel que revendiqué dans la revendication 1, **caractérisé en ce qu'**un diamètre hydraulique/équivalent moyen des passages d'écoulement fin (2130, 2130a, 2130b) du palier autolubrifiant composite n'est pas inférieur à 0.01 millimètre et n'est pas supérieur à (1.6 D*T/n)^{0,5} millimètre , dans lequel le symbole D indique le diamètre en millimètre de l'orifice axial (210) du jeu de palier (2, 2a, 2b), le symbole T indiquant la longueur axiale en millimètre de l'orifice axial ((212) du jeu de palier (2, 2a, 2b), et le symbole n indiquant le nombre de passages d'écoulement fin (2130, 2130a, 2130b).

10. Le palier autolubrifiant composite tel que revendiqué dans la revendication 1, **caractérisé en ce que** le lubrifiant stocké dans la chambre de stockage (20, 20a, 20b) est de la graisse.

11. Le palier autolubrifiant composite tel que revendiqué dans la revendication 1, **caractérisé en ce que** le lubrifiant stocké dans la chambre de stockage (20, 20a, 20b) est un agent lubrifiant hybride comportant des grains lubrifiants solides.

12. Le palier autolubrifiant composite tel que revendiqué dans la revendication 1, **caractérisé en ce que** la chambre de stockage (20, 20a, 20b) est en communication fluide avec l'environnement au moins au moins un orifice étroit (216), lequel(s) est/sont défini(s) au travers deux extrémités opposées de chacun des éléments de palier (21, 21a) pour remplir la chambre de stockage (20, 20a, 20b) d'un lubrifiant approprié au travers les passages d'écoulement fin (2130, 2130a, 2130b).
